# EUROPEAN PATENT APPLICATION

(11) **EP 3 113 078 A1**
(43) Date of publication of application: **04.01.2017**
(21) Application number: 16175892.5
(22) Date of filing: 23.06.2016
(51) Int. Cl.: G06K 9/46, G06K 9/48, G06T 7/60, G06K 9/00

(54) **METHOD AND SYSTEM FOR DETECTING REGULAR SHAPE**

(30) Priority: 03.07.2015 CN 201510387766
(71) Applicant: Ricoh Company, Ltd., Tokyo 143-8555 (JP)
(72) Inventor: REN, Jie, Haidian District Beinjing 100044 (CN); LU, Yaojie, Haidian District Beinjing 100044 (CN); SHI, Zhongchao, Haidian District Beinjing 100044 (CN)
(74) Representative: White, Duncan Rohan

(57) **Abstract**

A method and a system for detecting a regular shape are disclosed. The method includes performing edge detecting for input image data to form an edge image including a plurality of edges; extracting, based on a set radius, edge-equidistant points whose distance between the edge-equidistant point and corresponding edges of the plurality of edges is equal to the set radius; analyzing, based on spatial distribution of the edge-equidistant points in a local window, local orientation profiles of the edge-equidistant points in the local window at concentrating points; performing, based on spatial positions, clustering for the edge-equidistant points with the similar local orientation profiles to classify the edge-equidistant points with the similar local orientation profiles into the same group; and performing, based on the local orientation profiles and the spatial positions of the edge-equidistant points in the same group, an aggregation analysis of a type of a candidate of the regular shape.

## Description

### BACKGROUND OF THE INVENTION

### 1. Field of the Invention

The present invention generally relates to the field of image processing and computer vision, and specifically, relates to a method and a system for detecting a regular shape.

### 2. Description of the Related Art

A regular shape (or polygon) is a polygon whose interior angles are equal and all sides are equal. A circle may also be regarded as a regular polygon in an extreme case where a number of sides is infinite. The size of a regular shape may be defined as the radius of an inscribed circle, i.e., a vertical distance from the center point of the regular shape to each side (a tangent line of a curved side in a case of a circle).

In the related art, there are generally three types of shape detecting methods: 1) a method using color information, in which a regular shape with a specific meaning is usually designed as a shape with a special color to draw greater attention; 2) a method using shape information, in which a regular shape has some symmetry properties serving as available prior information; and 3) a method using a visual attention (sensing) model, in which a simulation of a human visual sensing system is performed to detect a most obvious object and shape in a detection image, and the object usually has a specific color feature or shape feature.

However, there are some problems in the above methods. The method based on the color information is easily affected by lack of light or an adverse weather condition, such as fog or haze, or rain or snow. In the method based on a visual attention model, the visual attention model is not specifically designed for a regular shape, thus it is difficult to obtain a satisfactory detection result in detection of a regular shape. Furthermore, in the method based on shape information, it is necessary to overcome problems such as deformation of a rotated shape or local shielding.

Accordingly, there is a need to provide a technology of rapidly and robustly detecting a regular shape by effectively using structure information of an image itself.

### SUMMARY OF THE INVENTION

According to an aspect of the present invention, a method for detecting a regular shape includes: performing edge detecting for input image data to form an edge image including a plurality of edges; extracting, based on a set radius, edge-equidistant points whose distance between the edge-equidistant point and corresponding edges of the plurality of edges is equal to the set radius; analyzing, based on spatial distribution of the edge-equidistant points in a local window, local orientation profiles of the edge-equidistant points in the local window at concentrating points; performing, based on spatial positions, clustering for the edge-equidistant points with the similar local orientation profiles to classify the edge-equidistant points with the similar local orientation profiles into the same group; and performing, based on the local orientation profiles and the spatial positions of the edge-equidistant points in the same group, an aggregation analysis of a type of a candidate of the regular shape.

According to another aspect of the present invention, a system for detecting a regular shape includes: an edge detecting apparatus configured to perform edge detecting for input image data to form an edge image including a plurality of edges; an edge-equidistant point extracting apparatus configured to extract edge-equidistant points based on a set radius, distances between each of the edge-equidistant points and corresponding edges of the plurality of edges being equal to the set radius; a local orientation profile analyzing apparatus configured to analyze, based on spatial distribution of the edge-equidistant points in a local window, local orientation profiles of the edge-equidistant points in the local window at concentrating points; a clustering apparatus configured to perform, based on spatial positions, clustering for the edge-equidistant points with the similar local orientation profiles to classify the edge-equidistant points with the similar local orientation profiles into the same group; and an aggregation analysis apparatus configured to perform, based on the local orientation profiles and the spatial positions of the edge-equidistant points in the same group, an aggregation analysis of a type of a candidate of the regular shape.

### BRIEF DESCRIPTION OF THE DRAWINGS

FIG. 1 is a schematic drawing illustrating a hardware structure of embodiments of the present invention;
FIG. 2 is a flowchart illustrating a regular shape detecting method according to an embodiment of the present invention;
FIG. 3A is an example of an input image, and FIG. 3B is an example of an edge image;
FIG. 4 is a schematic drawing illustrating definition of an edge-equidistant point;
FIG. 5 is a schematic drawing illustrating spatial distribution of edge-equidistant points;
FIG. 6 is a flowchart illustrating an example of a process of analyzing local orientation profiles of the edge-equidistant points;
FIG. 7 is a schematic drawing illustrating the analysis of the local orientation profiles of the edge-equidistant points in different cases of a triangle, a circle and a single side;
FIG. 8 is a flowchart illustrating an example of a process of performing an aggregation analysis of groups of the edge-equidistant points to output a type, an orientation and/or a size of a regular shape;
FIGs. 9A, 9B and 9C are schematic drawings illustrating the aggregation analysis of the groups of the edge-equidistant points in different cases of a triangle, a circle and a single side;
FIG. 10A is a schematic drawing illustrating an original image and a detected type, orientation and size of a candidate of a regular shape, and FIG. 10B is a schematic drawing illustrating an original image and the detected type, orientation and size of the regular shape after verification and optimization;
FIG. 11 is a block diagram illustrating a regular shape detecting system apparatus according to another embodiment of the present invention; and
FIG. 12 is a block diagram illustrating an example of a computer system or a server 12 for implementing the embodiments of the present invention.

### DETAILED DESCRIPTION OF THE PREFERRED EMBODIMENTS

In the following, specific embodiments of the present invention will be described in detail with reference to the accompanying drawings. Although the present invention will be described with reference to the specific embodiments, the present invention is not limited to the embodiments. Furthermore, the present invention includes various modifications, amendments or equivalents that are made without departing from the scope of the present invention. It should be noted that, steps in the method may be implemented by any functional blocks or functional layouts, and the functional blocks or the functional layouts may be implemented as physical entities, logical entities, or combination thereof.

In the following, the present invention will be described in detail with reference to the accompanying drawings and the specific embodiments, so as to facilitate the understanding of the present invention.

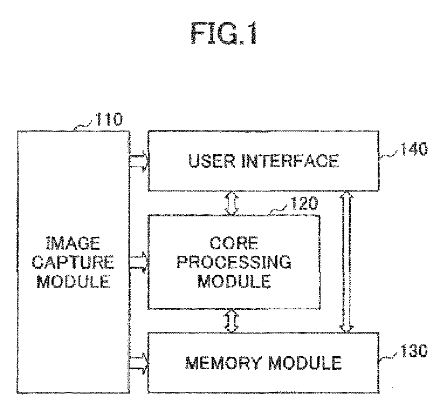

FIG. 1 is a schematic drawing illustrating a hardware structure of embodiments of the present invention.

As shown in FIG. 1, the entire system includes four modules, i.e., an image capture module 110, a core processing module 120, a memory module 130, and a user interface 140. It should be noted that, the above system is just an example rather than a limitation. Actually, any hardware may be added or removed according to actual situation.

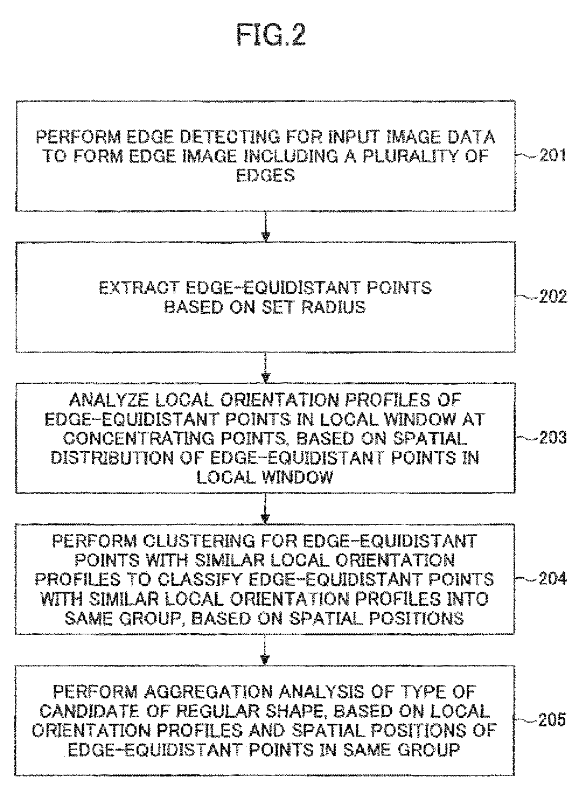

FIG. 2 is a flowchart illustrating a regular shape detecting method according to an embodiment of the present invention.

As shown in FIG. 2, the regular shape detecting method includes: step 201, performing edge detecting for input image data to form an edge image including a plurality of edges; step 202, extracting, based on a set radius, edge-equidistant points whose distance between the edge-equidistant point and corresponding edges of the plurality of edges is equal to the set radius; step 203, analyzing, based on spatial distribution of the edge-equidistant points in a local window, local orientation profiles of the edge-equidistant points in the local window at concentrating points; step 204, performing, based on spatial positions, clustering for the edge-equidistant points with the similar local orientation profiles to classify the edge-equidistant points with the similar local orientation profiles into the same group; and step 205 performing, based on the local orientation profiles and the spatial positions of the edge-equidistant points in the same group, an aggregation analysis of a type of a candidate of the regular shape.

In this way, by using the spatial distribution of the edge-equidistant points extracted in the edge image obtained after performing the edge detection, an analysis of spatial profiles of the edge-equidistant points, such as local orientation profiles of straight lines (or curved lines, single points or the like) consisting of edge-equidistant points around a point where a lot of edge-equidistant points are distributed (such as a concentrating point), can be performed. According to a principle that a regular shape usually includes edge-equidistant points with the similar local orientation profiles (for example, a triangle includes edge-equidistant points with local orientation profile of an included angle of 120 degrees (or 60 degrees)), clustering for the edge-equidistant points with the similar local orientation profiles are performed based on spatial positions, so that the edge-equidistant points with the similar local orientation profiles are classified into the same group. And then, an aggregation analysis of the local orientation profiles and the spatial positions of the edge-equidistant points in the same group (for example a triangle has local orientation profiles of an included angle of 120 degrees (or 60 degrees), and included angles between connection lines between the concentrating points of the edge-equidistant points and orientations of the connection lines overlap the local orientation profiles) is performed, and an aggregation analysis of a type of a candidate of the regular shape is performed.

Specifically, in step 201, the edge detecting for the input image data is performed to form the edge image including the edges. In prior art, there are many edge detecting algorithms. In an edge detecting method based on search, edge intensity which is usually indicated by a first-order derivative, such as a gradient module is calculated; and then, a local direction of the edge, such as a direction of gradient, is estimated by calculation; and then, a maximum value of a local gradient module is obtained by using the direction. In a method based on zero crossing, a zero crossing point of a second-order derivative obtained by an image is determined to position the edge. A zero crossing point of a Laplace operator or a non-linear differential equation is used. An operator of the first-order derivative may include a Roberts Cross operator, a Prewitt operator, a Sobel operator, a Kirsch operator, a compass operator or the like. An operator of the second-order derivative may include Marr-Hildreth, a second-order derivative zero crossing point in a gradient direction, a Canny operator, a Laplacian operator or the like. In the description of the present invention, only a gradient algorithm is used as an example to calculate the edge intensity; however, it is obvious that the gradient algorithm is just an example and the present invention is not limited to this example, and any kind of edge detecting algorithm may be actually used by a person skilled in the art to achieve the purpose of edge detection.

In this way, the edge image where the edges are indicated can be obtained; and edge shapes of with a regular shape (corresponding to an object with an actual regular shape) and edge shapes with other shapes may exist in the edge image. In the following steps, the edge shapes with a regular shape may be obtained from the edge image, and the actual regular shape is determined based on the edge shapes with the regular shape.

In step 202, the edge-equidistant points are extracted based on the set radius. The distance between each edge-equidistant point and corresponding edges of the plurality of edges is equal to the set radius. Specifically, the edge in the edge image may be a straight line, and may also be a curved line. When the edge is a straight line, a vertical distance between the edge-equidistant point and the straight line is equal to the set radius; and if the edge is a curved line, a vertical distance between the edge-equidistant point and a tangent line at a point of the curved line is equal to the set radius.

The step 202 may include: extracting, using a radial symmetry transform algorithm, the edge-equidistant points whose distance from a nearest edge pixel is the set radius; and retaining the edge-equidistant points whose number of the edge-equidistant points at a same pixel is greater than a predetermined filtering threshold. It should be noted that, the radial symmetry transform algorithm is just an example and the present invention is not limited to this example, and a person skilled in the art may also apply another algorithm to extract the edge-equidistant points.

Usually, the distribution of the edge-equidistant points obtained from edges of an actual regular shape is also a regular shape; however, the regular shape of the edge-equidistant points is in a proportional relationship with the actual regular shape, namely, the shapes of those two may be similar but the size of those two may be different. Accordingly, by learning and analyzing the distribution of the edge-equidistant points, a rule of the distribution of the edge-equidistant points can be obtained based on a rule of the regular shape, and the candidate of the regular shape and the actual regular shape can be further determined.

In step 203, the local orientation profiles of the edge-equidistant points in the local window at concentrating points are analyzed based on the spatial distribution of the edge-equidistant points in the local window. The edge-equidistant points are extracted for all of the edges in the edge image, accordingly a distribution diagram consisting of the edge-equidistant points may be obtained. By using the distribution diagram, distribution of edge-equidistant points around a concentrating point where a lot of edge-equidistant points concentrate may be obtained. For example, if a lot of edge-equidistant points with a straight line shape concentrate around the concentrating point, an obvious local orientation profile (for example, the direction of the straight line is regarded as the local orientation) may be obtained. On the other hand, if a lot of edge-equidistant points without an obvious straight line shape concentrate around the concentrating point, a non-obvious local orientation profile may be obtained, namely there is not an obvious straight line direction.

For example, the local orientation profiles of the edge-equidistant points in the local window may be analyzed using an independent component analysis (ICA) algorithm. It should be noted that, the independent component analysis algorithm is just an example, and another analysis algorithm such as a principle component analysis algorithm may also be used.

In step 204, the clustering for the edge-equidistant points with the similar local orientation profiles is performed based on the spatial positions, so that the edge-equidistant points with the similar local orientation profiles are classified into the same group. In this step, the edge-equidistant points with the similar local orientation profiles are searched for in the local window, because the regular shape of the obtained distribution of the edge-equidistant points may be similar to that of the edges of the actual regular shape. For example, the obtained distribution of the edge-equidistant points of an equilateral polygon may be similar to that of an actual equilateral polygon. In this distribution, the edge-equidistant points usually have the similar local orientation profiles; and for example, if the edge-equidistant points have a local orientation profile in which an included angle is 120 degrees or 60 degrees, the equilateral polygon may be an equilateral triangle. Thus, computational complexity of the aggregation analysis can be reduced by performing the clustering for the edge-equidistant points with the similar local orientation profiles based on the spatial positions to classify the edge-equidistant points with the similar local orientation profiles into the same group. And then, the aggregation analysis of the type of the candidate of the regular shape is performed based on only the distribution of the edge-equidistant points that can be clustered into the same group.

In step 205, the aggregation analysis of the type of the candidate of the regular shape is performed based on the local orientation profiles and the spatial positions of the edge-equidistant points in the same group. All of the edge-equidistant points in the same group have the similar local orientation profiles; accordingly, the aggregation analysis of the local orientation profiles and the spatial positions of the edge-equidistant points in the same group may be performed to estimate the type of the candidate of the regular shape, based on a rule of straight line orientation of sides of the regular shape and a rule of distribution of vertexes of the regular shape.

Specifically, in an example, step 205 may include: determining a number of sides and a rotation angle of a shape of the candidate of the regular shape, based on local orientation directions indicated by the local orientation profiles of the edge-equidistant points at one pixel, and a number of the local orientation directions, when the number of the edge-equidistant points at the one pixel is greater than a first threshold; and determining the type of the candidate of the regular shape, based on the local orientation profiles of the edge-equidistant points at a plurality of pixels, and spatial positional relationship among the edge-equidistant points at the pixels, when the number of the edge-equidistant points at the pixels is less than the first threshold and greater than a second threshold. The first threshold is greater than the second threshold.

More specifically, in the former case, when the number of the edge-equidistant points at the one pixel is greater than the first threshold, the set radius in step 202 may basically be a radius of an actual regular shape, the edge-equidistant points obtained by the radius may gather at or around a center point of the regular shape, and the quantity of the edge-equidistant points at or around the pixel of the center point may be large. Accordingly, a relatively large threshold is set for selection of this case. In this case, the number of the sides and the rotation angle of the shape of the candidate of the regular shape may be determined based on the local orientation directions indicated by the local orientation profiles of the edge-equidistant points at the pixel, and the number of the local orientation directions. Specifically, when the local orientation directions indicated by the local orientation profiles of the edge-equidistant points at the pixel are uniformly distributed in a range of 360 degrees and the number of the local orientation directions is a large value, the regular shape may be a circle. When the included angles between the local orientation directions indicated by the local orientation profiles of the edge-equidistant points at the pixel are 120 degrees (or 60 degrees) and the number of the local orientation directions is about three, the regular shape may be an equilateral triangle. When the included angles between the local orientation directions indicated by the local orientation profiles of the edge-equidistant points at the pixel are 90 degrees and the number of the local orientation directions is about four, the regular shape may be an equilateral quadrilateral. In the same manner, when the included angles between the local orientation directions indicated by the local orientation profiles of the edge-equidistant points at the pixel are 360/n degrees and the number of the local orientation directions is about n, the regular shape may be an equilateral polygon with n sides (n is a positive integer greater than or equal to 3).

In the latter case, when the number of the edge-equidistant points at the pixels is less than the first threshold and greater than the second threshold, namely the number is not large, the set radius in step 202 may be greater or less than a radius of an actual regular shape. In this case, the type of the candidate of the regular shape is determined based on the local orientation profiles of the edge-equidistant points at the plurality of pixels, and the spatial positional relationship among the edge-equidistant points at the pixels.

In an example, determining the type of the candidate of the regular shape, based on the local orientation profiles of the edge-equidistant points at the pixels, and the spatial positional relationship among the edge-equidistant points at the pixels, when the number of the edge-equidistant points at the pixels is less than the first threshold and greater than the second threshold may include: determining that the type of the candidate of the regular shape is a polygon, and determining a number of sides of the polygon based on an included angle between two local orientation directions indicated by the local orientation profiles of the edge-equidistant points at each of the pixels, and an overlap degree between connection lines between the edge-equidistant points at each of the pixels and the corresponding included angle, when the local orientation profiles of the edge-equidistant points at each of the pixels clearly indicate the two local orientation directions; determining that the type of the candidate of the regular shape is a circle, when the local orientation profiles of the edge-equidistant points at each of the pixels do not clearly indicate a local orientation direction; and determining that no candidate of the regular shape exists, when the local orientation profiles of the edge-equidistant points at each of the pixels clearly indicate only one local orientation direction.

In an example, determining that the type of the candidate of the regular shape is the polygon, and determining the number of the sides of the polygon based on the included angle between the two local orientation directions indicated by the local orientation profiles of the edge-equidistant points at each of the pixels, and the overlap degree between the connection lines between the edge-equidistant points at each of the pixels and the corresponding included angle, when the local orientation profiles of the edge-equidistant points at each of the pixels clearly indicate the two local orientation directions may include: determining that the number of the sides of the polygon is n, when the included angle between the two local orientation directions is basically equal to 360°/n, n pixels whose number of the edge-equidistant points is less than the first threshold and greater than the second threshold, and the connection lines between the n pixels basically overlap the corresponding local orientation directions. Here, n is a positive integer greater than or equal to 3.

In an example, the regular shape detecting method may further include: verifying the type of the candidate of the regular shape; optimizing a size of the candidate of the regular shape and rotation angle information; and outputting the regular shape after verification and optimization. An original radius is set in step 202, and the type of the candidate of the regular shape is obtained by steps 203-205. Next, if more accurate information such as a type of an actual regular shape, an actual radius thereof, or actual rotation angle information (for example, a triangle is a normal triangle, an inverted triangle, or a triangle with another rotation angle) is required, the type of the candidate of the regular shape will be further verified as described below.

In an example, verifying the type of the candidate of the regular shape may include estimating, based on the type of the candidate of the regular shape, a center point of the candidate of the regular shape; increasing or decreasing the set radius by a vertical distance between the center point and a connection line between the edge-equidistant points in the same group, so that an increased radius or a decreased radius is obtained; detecting whether an edge of a regular shape exists in the vicinity of positions, whose distance from the center point is the increased radius or the decreased radius, in the edge image; verifying that the type of the candidate of the regular shape is the regular shape, and setting the increased radius or the decreased radius as an actual radius of the regular shape, when the edge of the regular shape is detected; and verifying that the type of the candidate of the regular shape is not the regular shape, when no edge of the regular shape is detected.

Here, the radius originally set in step 202 may not be a radius of an actual regular shape; however, a similar regular figure consisting of the edge-equidistant points obtained using the originally set radius usually is in a proportional relationship with a figure of the actual regular shape, and the relationship may be a relationship in which a value obtained by adding or subtracting the radius of the similar regular figure consisting of the edge-equidistant points to or from the originally set radius may be equal to the radius of the actual regular shape. However, it is necessary to further perform verification for determining whether to add or subtract. Accordingly, the set radius is increased or decreased by the vertical distance between the center point and the connection line between the edge-equidistant points in the same group (namely, the radius of the similar regular figure consisting of the edge-equidistant points), so that the increased radius or the decreased radius is obtained; and it is detected whether an edge of a regular shape exists in the vicinity of positions, whose distance from the center point is the increased radius or the decreased radius, in the edge image. When the edge of the regular shape is detected, it is verified that the type of the candidate of the regular shape is the regular shape, and the increased radius or the decreased radius is set as an actual radius of the regular shape; and when no edge of the regular shape is detected, it is verified that the type of the candidate of the regular shape is not the regular shape.

In an example, optimizing the size of the candidate of the regular shape and the rotation angle information may include determining a size of the radius of the detected edge of the regular shape, when it is verified that the type of the candidate of the regular shape is the regular shape; and obtaining the optimized size of the regular shape and rotation angle information, based on the determined size of the radius and the detected edge of the regular shape. Here, the increased radius or the decreased radius when the edge of the regular shape is detected may be set as the actual radius of the regular shape. Furthermore, rotation angle information of the regular shape, such as information that a triangle is a normal triangle, an inverted triangle, or a triangle with another rotation angle, may be obtained based on the detected edge of the actual regular shape.

In this way, by using the spatial distribution of the edge-equidistant points extracted in the edge image obtained after performing the edge detection, an analysis of spatial profiles of the edge-equidistant points, such as local orientation profiles of straight lines (or curved lines, single points or the like) consisting of edge-equidistant points around a point where a lot of edge-equidistant points are distributed (such as a concentrating point), can be performed. According to a principle that a regular shape usually includes edge-equidistant points with the similar local orientation profiles (for example, a triangle includes edge-equidistant points with local orientation profile of an included angle of 120 degrees (or 60 degrees)), clustering for the edge-equidistant points with the similar local orientation profiles are performed based on spatial positions, so that the edge-equidistant points with the similar local orientation profiles are classified into the same group. And then, an aggregation analysis of the local orientation profiles and the spatial positions of the edge-equidistant points in the same group (for example a triangle has local orientation profiles of an included angle of 120 degrees (or 60 degrees), and included angles between connection lines between the concentrating points of the edge-equidistant points and orientations of the connection lines overlap the local orientation profiles) is performed, and an aggregation analysis of a type of a candidate of the regular shape is performed. Furthermore, the set radius may be increased or decreased by the vertical distance between the center point and the connection line between the edge-equidistant points in the same group (namely, the radius of the similar regular figure consisting to the edge-equidistant points), so that the increased radius or the decreased radius is obtained; it may be detected whether the edge of the regular shape exists in the vicinity of positions, whose distance from the center point is the increased radius or the decreased radius, in the edge image; and it may be verified whether the regular shape exists, and the radius size and rotation angle information of the regular shape of the actual regular shape may be optimized.

In the following, a specific flow and corresponding schematic drawings of the method of the present invention may be described with reference to an example of a specific input image.

It should be noted that, the example to be described below just is a specific example, and the embodiments of the present invention are not limited to the following specific steps, values, conditions, data, order, etc. A person skilled in the art may construct other embodiments that are not mentioned in the present specification, by reading the present specification and using the concept of the present invention.

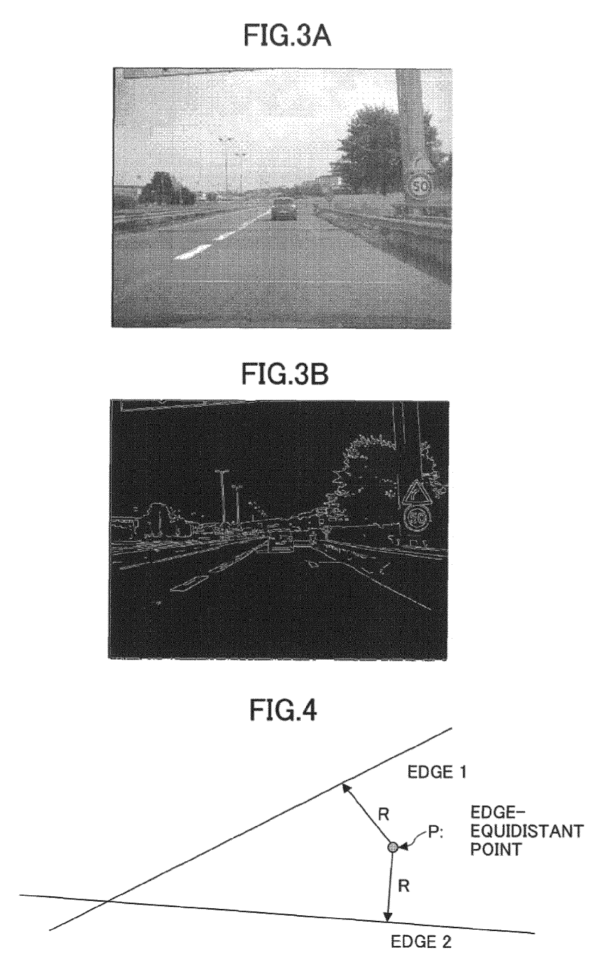

FIG. 3A is an example of an input image, and FIG. 3B is an example of an edge image. In the example, a gradient image is extracted based on image data such as FIG. 3A. The gradient image of the data of the input image may be obtained using a Sobel operator or other corresponding image operators. Edge-equidistant points are extracted based on gradient magnitude of the generated gradient image, so that the edge image as shown in FIG. 3B is constructed.

FIG. 4 is a schematic drawing illustrating definition of an edge-equidistant point.

In this step, the edge-equidistant points are extracted based on the generated edge image. As shown in FIG. 4, the edge-equidistant points means a pixel where distances from some edge points are equal. The edge-equidistant points may be extracted using any prior art. In the embodiment, the extraction may be performed using a method of a radial symmetry transform. For an originally predetermined radius R, the edge-equidistant points whose distance from a nearest edge pixel is R, are extracted. The radius R may be not an actual size of an object with the regular shape to be detected, and deviation is allowed.

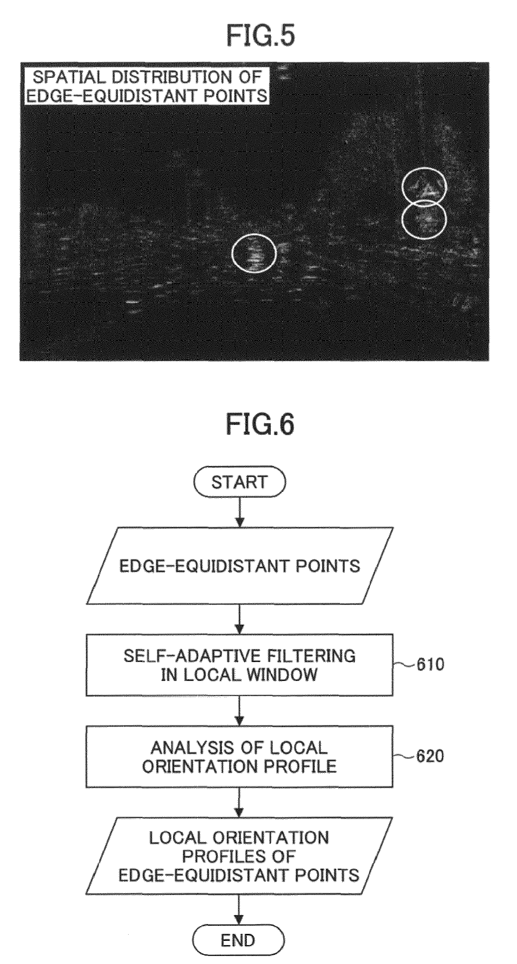

A detection result of the edge-equidistant points is shown in FIG. 5. FIG. 5 is a schematic drawing illustrating spatial distribution of edge-equidistant points. In FIG. 5, the white points represent edge-equidistant points. Accordingly, in FIG. 5, the more obvious white points at a position are, there are more edge-equidistant points at the position. In the distribution map of FIG. 5, in order to eliminate interference of noise, a predetermined threshold may be defined, so that a pixel whose number of the edge-equidistant points at the pixel is less than the predetermined threshold is filtered. In FIG. 5, it is assumed that the number of the edge-equidistant points at the white portions in local windows shown by the white circles are greater than or equal to the predetermined threshold described above. Thus, these edge-equidistant points are retained to perform the subsequent analysis.

FIG. 6 is a flowchart illustrating an example of a process of analyzing local orientation profiles of the edge-equidistant points.

In this step, local orientation profiles of the edge-equidistant points are analyzed. Each of the edge-equidistant points has its own local orientation profile. The local orientation profile includes local structural information of the point, relatively strong primary orientation components, directions of primary orientation components, etc. FIG. 6 shows a flowchart of a local orientation analysis around each edge-equidistant point.

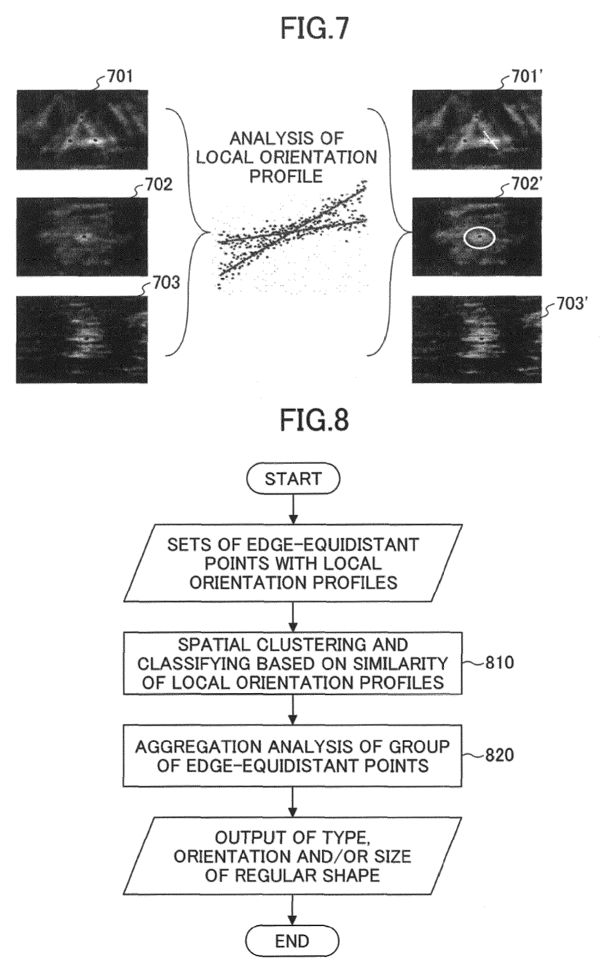

First, in step 610, for each edge-equidistant point, a corresponding local window is extracted, filtering for the local window is performed based on a self-adaptive threshold, and pixels with a value greater than the threshold are retained. The filtering step using the self-adaptive threshold has been described in the above description of FIG. 5. An orientation analysis is performed for the spatial distribution of the retained points in the local window, and orientation information of the primary components are extracted. Any component analysis method may be used, and in the present embodiment, an independent component analysis (ICA) method, by which data or a signal is divided into a statistically-independent linear combination of non-Gaussian signal sources, is used; however the present invention is not limited to the ICA method. Namely, as shown in the middle of FIG. 7, by analyzing the spatial distribution of the edge-equidistant points, some edge-equidistant points may be determined as a linear straight line, and the direction of the straight line may be determined as the orientation information, so that the direction of the straight line passing through these edge-equidistant points may be set as the local orientation profile information of the edge-equidistant points.

In step S620, the local orientation profiles are analyzed for the retained edge-equidistant points. A specific example is shown in FIG. 7.

FIG. 7 is a schematic drawing illustrating the analysis of the local orientation profiles of the edge-equidistant points in different cases of a triangle, a circle and a single side. In this example, for the triangle image 701 in the upper left, the local orientation profile of each of the edge-equidistant points includes two primary orientation components whose angle between orientation directions is about 120 degrees (or an acute of 60 degrees). For a circle or a regular polygon with more sides 702, the primary orientation components are approximately uniformly distributed in direction (namely, there is no obvious orientation), similar to a Gaussian distribution. For another straight line figure 703, the primary orientation components of the edge-equidistant points only have one strong component of direction. Thus, by analyzing the rule of the spatial distribution of the edge-equidistant points of the edges of the regular shapes, it is found that the spatial distribution of the edge-equidistant points have good distinguishing characteristic and elimination characteristic for distinguishing the regular figures (such as an equilateral polygon and a circle) and non-regular images (such as various messy straight lines). The local orientation profiles and/or the spatial distribution of the edge-equidistant points can provided enough prior information for estimating the characteristic of the regular shape.

FIG. 8 is a flowchart illustrating an example of a process of performing an aggregation analysis of groups of the edge-equidistant points to output a type, an orientation and/or a size of a regular shape.

In this step, the aggregation analysis is performed based on the calculated edge-equidistant points and the local orientation profiles thereof, so that the type, the orientation and/or the size of the candidate of the regular shape is verified. The flowchart of the aggregation analysis is shown in FIG. 8.

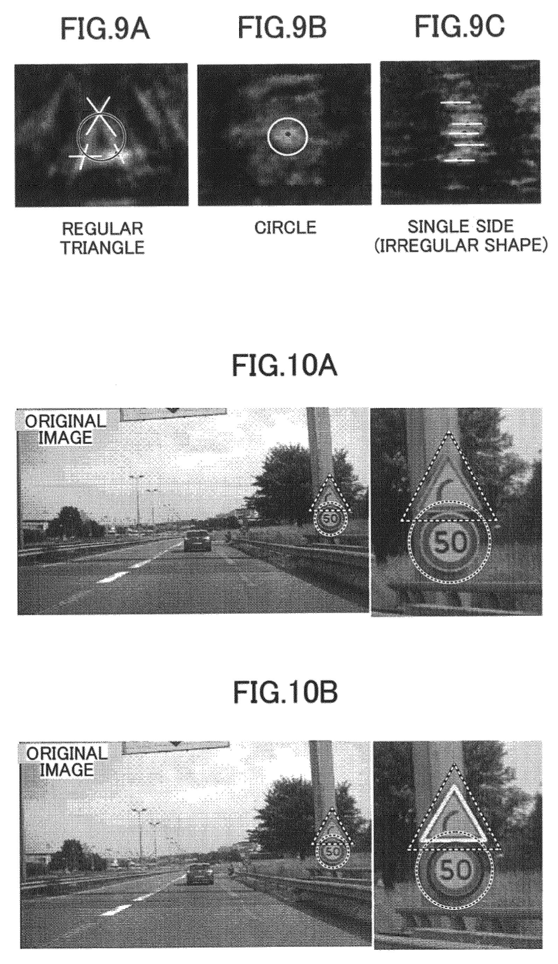

In step 801, the edge-equidistant points with the similar local orientation profiles are clustered and classified into the same group based on the spatial positions as shown in FIG. 9. FIG. 9 is a schematic drawing illustrating the aggregation analysis of the groups of the edge-equidistant points in different cases of a triangle, a circle and a single side. As an example of a triangle (see FIG. 9A), at proximity spatial positions, three edge equidistant points are clustered and classified into the same group, and each of the three edge-equidistant points have two strong primary orientation components whose an angle between the two primary orientation directions is about 120 degrees (or 60 degrees). Here, the strong primary orientation component may be obtained by the above independent component analysis method. In subsequent step 820, the three edge-equidistant points will be aggregately analyzed, namely the aggregation analysis will be performed. In some groups, there may be some edge-equidistant points that cannot constitute a regular polygon (for example FIG. 9C), thus such groups will be eliminated in subsequent analysis. Furthermore, according to the result of the aggregation analysis, the shape type, the orientation and the size of the spatial radius of the clustering and classification are output as the detection result of the regular shape candidate detection.

In step 820, the edge-equidistant points in the same group are aggregately analyzed, namely the aggregation analysis is performed, so that the type, the orientation, and/or the size (radius) of the candidate of the regular shape is determined.

The clustering aggregation analysis may be performed in the following different cases.
1) A high-threshold Th is set, it is determined whether a point is greater than the high-threshold Th, and the number of sides of the regular shape and a rotation angle of a shape are determined based on the number of the local primary orientation directions.

In this case, the set radius in step 202 may basically be a radius of an actual regular shape, the edge-equidistant points obtained by the radius may gather at or around a center point of the regular shape, and the quantity of the edge-equidistant points at or around the pixel of the center point may be large. Accordingly, the relatively large threshold Th is set for selection of this case. In this case, the number of the sides and the rotation angle of the shape of the candidate of the regular shape may be determined based on the local orientation directions indicated by the local orientation profiles of the edge-equidistant points at the pixel, and the number of the local orientation directions. Specifically, when the local orientation directions indicated by the local orientation profiles of the edge-equidistant points at the pixel are uniformly distributed in a range of 360 degrees, the number of the local orientation directions is a large value and the distribution is similar to a Gaussian distribution, the regular shape may be a circle. When the included angles between the local orientation directions indicated by the local orientation profiles of the edge-equidistant points at the pixel are 120 degrees (or 60 degrees) and the number of the local orientation directions is about three, the regular shape may be an equilateral triangle. When the included angles between the local orientation directions indicated by the local orientation profiles of the edge-equidistant points at the pixel are 90 degrees and the number of the local orientation directions is about four, the regular shape may be a square (an equilateral quadrilateral). In the same manner, when the included angles between the local orientation directions indicated by the local orientation profiles of the edge-equidistant points at the pixel are 360/n degrees and the number of the local orientation directions is about n, the regular shape may be an equilateral polygon with n sides (n is a positive integer greater than or equal to 3).
2) For points less than the high-threshold Th and greater than a low-threshold TI, the clustering and aggregation analysis are performed based on the local orientation profiles and spatial position relationship, and processing is performed according to different cases; because the set radius in step 202 may be greater or less than a radius of a actual regular shape.
   a) A case of two sides: corresponding to FIG. 9A, in this cluster, each point has two obvious primary local orientations. The type of the regular shape included in this cluster is determined case by case, based on an included angle of the two sides, and an overlap degree between connection lines of corresponding points and the included angle (it should be noted that, the point described here may be a local position where a lot of edge-equidistant points exist at the local position, namely a concentrating point where edge-equidistant points concentrate).
      i. The included angle is about 120 degrees (or 60 degrees): corresponding to a case of an equilateral triangle, when the cluster includes three points, the included angle of each point is about 120 degrees (or 60 degrees), and each connection line of the three points basically overlaps the primary direction, the set of the three candidate points constituting the equilateral triangle are extracted.
      ii. The included angle is about 90 degrees: corresponding to a case of a equilateral quadrilateral, when the cluster includes four points, the included angle of each point is about 90 degrees, and each connection line of the four points basically overlaps the primary direction, the set of the three candidate points constituting the equilateral quadrilateral are extracted.
      iii. For other quadrilateral polygons, in the same manner, when each included angle between the two local orientation directions is about 360/n degrees, and each connection line of the n points basically overlaps the local orientation direction, it is determined that the number of the sides of the polygon is n, and n is a positive integer greater than or equal to 3.
   b) A case of a circle: corresponding to FIG. 9B, in this cluster, when each point has no obvious primary local orientation and there is an obvious circular ring or a circular region in a small circle range, there is a center point of a circle in the region.
   c) A case of a single side: corresponding to FIG. 9C, in this cluster, when each point has only one local primary orientation, the cluster belongs to a case of a single side and does not constitute a projection result of a regular polygon. Thus, the cluster is removed.

The geometric center and the rotation angle of the candidate of the equilateral polygon can be determined, based on a set of the detected vertexes of the corresponding shape of the equilateral polygon. Furthermore, the actual radius size and rotation angle of the actual equilateral polygon and/or the corresponding equilateral polygon are determined based on subsequent steps of verification and optimization.

FIG. 10A is a schematic drawing illustrating an original image and a detected type, orientation and size of a candidate of a regular shape, and FIG. 10B is a schematic drawing illustrating an original image and the detected type, orientation and size of the regular shape after verification and optimization.

Finally, the detection result of the candidate of the regular shape is further verified and optimized. For the candidate detection result, a subsequent verification process may be used to further verify the candidate result and to optimize the size of the candidate shape and the rotation angle information. The detection result of the orientation information of shape may be verified based on the above extracted edge image, and may be verified and optimized in the space of the local window in the group of the valid edge-equidistant points. The actual size of shape is optimized based on the originally predetermined radius R, and the radius r of the shape consisting of the edge-equidistant points in the group. The set radius R is increased or decreased by a vertical distance between a center point of the candidate of the regular shape and a connection line between the edge-equidistant points in the same group (namely, the radius r of the regular shape consisting of the edge-equidistant points in the group), so that an increased radius (R+r) or a decreased radius (R-r) is obtained. It is detected whether an edge of a regular shape exists in the vicinity of positions, whose distance from the center point is the increased radius (R+r) or the decreased radius (R-r), in the edge image. When the edge of the regular shape is detected, it is verified that the type of the candidate of the regular shape is the regular shape, and the increased radius or the decreased radius is set as an actual radius of the regular shape. On the other hand, when no edge of the regular shape is detected, it is verified that the type of the candidate of the regular shape is not the regular shape. The increased radius or the decreased radius when the edge of the regular shape is detected is set as the actual radius (R+r or R-r) of the regular shape. Additionally, the rotation angle information of the regular shape may be obtained from the detected edges of the actual regular shape.

In FIG. 10A, a predetermined size of the shape is a little larger than the actual size of an object as shown by the dotted line. FIG. 10B shows an optimized detection result. As shown in FIG. 10B, after the verification and optimization processing, the actual size of the object is adjusted (R-r), and the output result is shown by the solid line.

In this way, by using the spatial distribution of the edge-equidistant points extracted in the edge image obtained after performing the edge detection, an analysis of spatial profiles of the edge-equidistant points, such as local orientation profiles of straight lines (or curved lines, single points or the like) consisting of edge-equidistant points around a point where a lot of edge-equidistant points are distributed (such as a concentrating point), can be performed. According to a principle that a regular shape usually includes edge-equidistant points with the similar local orientation profiles (for example, a triangle includes edge-equidistant points with local orientation profile of an included angle of 120 degrees (or 60 degrees)), clustering for the edge-equidistant points with the similar local orientation profiles are performed based on spatial positions, so that the edge-equidistant points with the similar local orientation profiles are classified into the same group. And then, an aggregation analysis of the local orientation profiles and the spatial positions of the edge-equidistant points in the same group (for example a triangle has local orientation profiles of an included angle of 120 degrees (or 60 degrees), and included angles between connection lines between the concentrating points of the edge-equidistant points and orientations of the connection lines overlap the local orientation profiles) is performed, and an aggregation analysis of a type of a candidate of the regular shape is performed. Furthermore, the set radius may be increased or decreased by the vertical distance between the center point and the connection lines between the edge-equidistant points in the same group (namely, the radius of the similar regular figure consisting of the edge-equidistant points), so that the increased radius or the decreased radius is obtained; it may be detected whether the edge of the regular shape exists in the vicinity of positions, whose distance from the center point is the increased radius or the decreased radius, in the edge image; and it may be verified whether the regular shape exists, and the radius size and rotation angle information of the regular shape of the actual regular shape may be optimized.

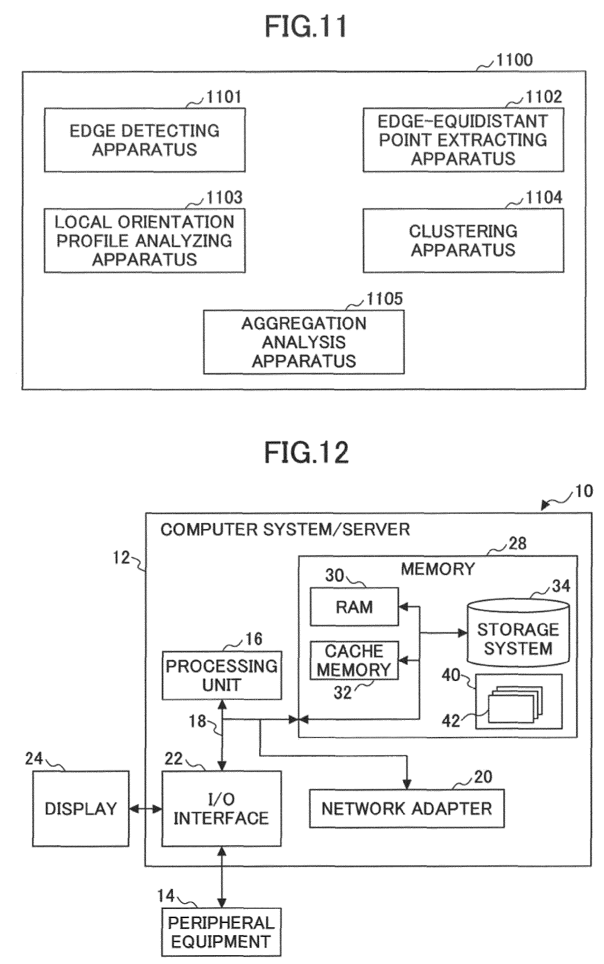

FIG. 11 is a block diagram illustrating a regular shape detecting system apparatus according to another embodiment of the present invention.

As shown in FIG. 11, the regular shape detecting system 1100 includes an edge detecting apparatus 1101 configured to perform edge detecting for input image data to form an edge image including a plurality of edges; an edge-equidistant point extracting apparatus 1102 configured to extract edge-equidistant points based on a set radius, distances between each of the edge-equidistant points and corresponding edges of the plurality of edges being equal to the set radius; a local orientation profile analyzing apparatus 1103 configured to analyze, based on spatial distribution of the edge-equidistant points in a local window, local orientation profiles of the edge-equidistant points in the local window at concentrating points; a clustering apparatus 1104 configured to perform, based on spatial positions, clustering for the edge-equidistant points with the similar local orientation profiles to classify the edge-equidistant points with the similar local orientation profiles into the same group; and an aggregation analysis apparatus 1105 configured to perform, based on the local orientation profiles and the spatial positions of the edge-equidistant points in the same group, an aggregation analysis of a type of a candidate of the regular shape.

In this way, by using the spatial distribution of the edge-equidistant points extracted in the edge image obtained after performing the edge detection, an analysis of spatial profiles of the edge-equidistant points, such as local orientation profiles of straight lines (or curved lines, single points or the like) consisting of edge-equidistant points around a point where a lot of edge-equidistant points are distributed (such as a concentrating point), can be performed. According to a principle that a regular shape usually includes edge-equidistant points with the similar local orientation profiles (for example, a triangle includes edge-equidistant points with local orientation profile of an included angle of 120 degrees (or 60 degrees)), clustering for the edge-equidistant points with the similar local orientation profiles are performed based on spatial positions, so that the edge-equidistant points with the similar local orientation profiles are classified into the same group. And then, an aggregation analysis of the local orientation profiles and the spatial positions of the edge-equidistant points in the same group (for example a triangle has local orientation profiles of an included angle of 120 degrees (or 60 degrees), and included angles between connection lines between the concentrating points of the edge-equidistant points and orientations of the connection lines overlap the local orientation profiles) is performed, and an aggregation analysis of a type of a candidate of the regular shape is performed.

Specifically, the edge detecting apparatus 1101 performs edge detecting for the input image data to form the edge image including the edges. In prior art, there are many edge detecting algorithms. In the description of the present invention, only a gradient algorithm is used as an example to calculate the edge intensity; however, it is obvious that the gradient algorithm is just an example and the present invention is not limited to this example, and any kinds of edge detecting algorithm may be actually used by a person skilled in the art to achieve the purpose of edge detection.

In this way, the edge image where the edges are indicated can be obtained; and edge shapes of with a regular shape (corresponding to an object with an actual regular shape) and edge shapes with other shapes may exist in the edge image. In the following steps, the edge shapes with a regular shape may be obtained from the edge image, and the actual regular shape is determined based on the edge shapes with the regular shape.

The edge-equidistant point extracting apparatus 1102 extracts the edge-equidistant points based on the set radius. The distance between each edge-equidistant point and corresponding edges of the plurality of edges is equal to the set radius. Specifically, the edge in the edge image may be a straight line, and may also be a curved line. When the edge is a straight line, a vertical distance between the edge-equidistant point and the straight line is equal to the set radius; and if the edge is a curved line, a vertical distance between the edge-equidistant point and a tangent line at a point of the curved line is equal to the set radius.

The edge-equidistant point extracting apparatus 1102 may extract, using a radial symmetry transform algorithm, the edge-equidistant points whose distance from a nearest edge pixel is the set radius; and retain the edge-equidistant points whose number of the edge-equidistant points at a same pixel is greater than a predetermined filtering threshold. It should be noted that, the radial symmetry transform algorithm is just an example and the present invention is not limited to this example, and a person skilled in the art may also apply another algorithm to extract the edge-equidistant points.

Usually, the distribution of the edge-equidistant points obtained from edges of an actual regular shape is also a regular shape; however, the regular shape of the edge-equidistant points is in a proportional relationship with the actual regular shape, namely, the shapes of those two may be similar but the size of those two may be different. Accordingly, by learning and analyzing the distribution of the edge-equidistant points, a rule of the distribution of the edge-equidistant points can be obtained based on a rule of the regular shape, and the candidate of the regular shape and the actual regular shape can be further determined.

The local orientation profile analyzing apparatus 1103 analyzes the local orientation profiles of the edge-equidistant points in the local window at concentrating points based on the spatial distribution of the edge-equidistant points in the local window. The edge-equidistant points are extracted for all of the edges in the edge image, accordingly a distribution diagram consisting of the edge-equidistant points may be obtained. By using the distribution diagram, distribution of edge-equidistant points around a concentrating point where a lot of edge-equidistant points concentrate may be obtained. For example, if a lot of edge-equidistant points with a straight line shape concentrate around the concentrating point, an obvious local orientation profile (for example, the direction of the straight line is regarded as the local orientation) may be obtained. On the other hand, if a lot of edge-equidistant points without an obvious straight line shape concentrate around the concentrating point, an non-obvious local orientation profile may be obtained, namely there is not an obvious straight line direction.

For example, the local orientation profiles of the edge-equidistant points in the local window may be analyzed using an independent component analysis (ICA) algorithm. It should be noted that, the independent component analysis algorithm is just an example, and other analysis algorithm such as a principle component analysis may also be used.

The clustering apparatus 1104 performs the clustering for the edge-equidistant points with the similar local orientation profiles based on the spatial positions, so that the edge-equidistant points with the similar local orientation profiles are classified into the same group. The clustering apparatus 1104 may search for the edge-equidistant points with the similar local orientation profiles in the local window, because the regular shape of the obtained distribution of the edge-equidistant points may be similar to that of the edges of the actual regular shape. For example, the obtained distribution of the edge-equidistant points of an equilateral polygon may be similar to that of an actual equilateral polygon. In this distribution, the edge-equidistant points usually have the similar local orientation profiles; and for example, if the edge-equidistant points have a local orientation profile in which an included angle is 120 degrees or 60 degrees, the equilateral polygon may be an equilateral triangle. Thus, computational complexity of the aggregation analysis can be reduced by performing the clustering for the edge-equidistant points with the similar local orientation profiles based on the spatial positions to classify the edge-equidistant points with the similar local orientation profiles into the same group. And then, the aggregation analysis of the type of the candidate of the regular shape is performed based on only the distribution of the edge-equidistant points that can be clustered into the same group.

The aggregation analysis apparatus 1105 performs the aggregation analysis of the type of the candidate of the regular shape based on the local orientation profiles and the spatial positions of the edge-equidistant points in the same group. All of the edge-equidistant points in the same group have the similar local orientation profiles; accordingly, the aggregation analysis of the local orientation profiles and the spatial positions of the edge-equidistant points in the same group may be performed to estimate the type of the candidate of the regular shape, based on a rule of straight line orientation of sides of the regular shape and a rule of distribution of vertexes of the regular shape.

Specifically, in an example, the aggregation analysis apparatus 1105 may determine a number of sides and a rotation angle of a shape of the candidate of the regular shape, based on local orientation directions indicated by the local orientation profiles of the edge-equidistant points at one pixel, and a number of the local orientation directions, when a number of the edge-equidistant points at the one pixel is greater than a first threshold; and determine the type of the candidate of the regular shape, based on the local orientation profiles of the edge-equidistant points at a plurality of pixels, and spatial positional relationship among the edge-equidistant points at the pixels, when a number of the edge-equidistant points at the pixels is less than the first threshold and greater than a second threshold. The first threshold is greater than the second threshold.

More specifically, in the former case, when the number of the edge-equidistant points at the one pixel is greater than the first threshold, the radius set by the edge-equidistant point extracting apparatus 1102 may basically be a radius of an actual regular shape, the edge-equidistant points obtained by the radius may gather at or around a center point of the regular shape, and the quantity of the edge-equidistant points at or around the pixel of the center point may be large. Accordingly, a relatively large threshold is set for selection of this case. In this case, the number of the sides and the rotation angle of the shape of the candidate of the regular shape may be determined based on the local orientation directions indicated by the local orientation profiles of the edge-equidistant points at the pixel, and the number of the local orientation directions. Specifically, when the local orientation directions indicated by the local orientation profiles of the edge-equidistant points at the pixel are uniformly distributed in a range of 360 degrees and the number of the local orientation directions is a large value, the regular shape may be a circle. When the included angles between the local orientation directions indicated by the local orientation profiles of the edge-equidistant points at the pixel are 120 degrees (or 60 degrees) and the number of the local orientation directions is about three, the regular shape may be an equilateral triangle. When the included angles between the local orientation directions indicated by the local orientation profiles of the edge-equidistant points at the pixel are 90 degrees and the number of the local orientation directions is about four, the regular shape may be an equilateral quadrilateral. In the same manner, when the included angles between the local orientation directions indicated by the local orientation profiles of the edge-equidistant points at the pixel are 360/n degrees and the number of the local orientation directions is about n, the regular shape may be an equilateral polygon with n sides (n is a positive integer greater than or equal to 3).

In the latter case, when the number of the edge-equidistant points at the pixels is less than the first threshold and greater than the second threshold, namely the number is not large, the radius set by the edge-equidistant point extracting apparatus 1102 may be greater or less than a radius of an actual regular shape. In this case, the type of the candidate of the regular shape is determined based on the local orientation profiles of the edge-equidistant points at the plurality of pixels, and the spatial positional relationship among the edge-equidistant points at the pixels.

In an example, determining the type of the candidate of the regular shape, based on the local orientation profiles of the edge-equidistant points at the pixels, and the spatial positional relationship among the edge-equidistant points at the pixels, when the number of the edge-equidistant points at the pixels is less than the first threshold and greater than the second threshold may include: determining that the type of the candidate of the regular shape is a polygon, and determining a number of sides of the polygon based on an included angle between two local orientation directions indicated by the local orientation profiles of the edge-equidistant points at each of the pixels, and an overlap degree between connection lines between the edge-equidistant points at each of the pixels and the corresponding included angle, when the local orientation profiles of the edge-equidistant points at each of the pixels clearly indicate the two local orientation directions; determining that the type of the candidate of the regular shape is a circle, when the local orientation profiles of the edge-equidistant points at each of the pixels do not clearly indicate a local orientation direction; and determining that no candidate of the regular shape exists, when the local orientation profiles of the edge-equidistant points at each of the pixels clearly indicate only one local orientation direction.

In an example, determining that the type of the candidate of the regular shape is the polygon, and determining the number of the sides of the polygon based on the included angle between the two local orientation directions indicated by the local orientation profiles of the edge-equidistant points at each of the pixels, and the overlap degree between the connection lines between the edge-equidistant points at each of the pixels and the corresponding included angle, when the local orientation profiles of the edge-equidistant points at each of the pixels clearly indicate the two local orientation directions may include: determining that the number of the sides of the polygon is n, when the included angle between the two local orientation directions is basically equal to 360°/n, n pixels whose the number of the edge-equidistant points is less than the first threshold and greater than the second threshold, and the connection lines between the n pixels basically overlap the corresponding local orientation directions. Here, n is a positive integer greater than or equal to 3.

In an example, the regular shape detecting system may further include: an apparatus for verifying the type of the candidate of the regular shape; an apparatus for optimizing a size of the candidate of the regular shape and rotation angle information; and an apparatus for outputting the regular shape after verification and optimization. An original radius is set by the edge-equidistant point extracting apparatus 1102, and the type of the candidate of the regular shape is obtained by steps 203-205. Next, if more accurate information such as a type of an actual regular shape, an actual radius thereof, or actual rotation angle information (for example, a triangle is a normal triangle, an inverted triangle, or a triangle with another rotation angle) is required, the type of the candidate of the regular shape will be further verified as described below.

In an example, the apparatus for verifying the type of the candidate of the regular shape may include estimating, based on the type of the candidate of the regular shape, a center point of the candidate of the regular shape; increasing or decreasing the set radius by a vertical distance between the center point and a connection line between the edge-equidistant points in the same group, so that an increased radius or a decreased radius is obtained; detecting whether an edge of a regular shape exists in the vicinity of positions, whose distance from the center point is the increased radius or the decreased radius, in the edge image; verifying that the type of the candidate of the regular shape is the regular shape, and setting the increased radius or the decreased radius as an actual radius of the regular shape, when the edge of the regular shape is detected; and verifying that the type of the candidate of the regular shape is not the regular shape, when no edge of the regular shape is detected.

Here, the radius originally set by the edge-equidistant point extracting apparatus 1102 may be not a radius of an actual regular shape; however, a similar regular figure consisting of the edge-equidistant points obtained using the originally set radius usually is in a proportional relationship with a figure of the actual regular shape, and the relationship may be a relationship that a value obtained by adding or subtracting the radius of the similar regular figure consisting of the edge-equidistant points to or from the originally set radius may be equal to the radius of the actual regular shape. However, it is necessary to further perform verification for determining whether to add or subtract. Accordingly, the set radius is increases or decreases by the vertical distance between the center point and the connection line between the edge-equidistant points in the same group (namely, the radius of the similar regular figure consisting to the edge-equidistant points), so that the increased radius or the decreased radius is obtained; and it is detected whether an edge of a regular shape exists in the vicinity of positions, whose distance from the center point is the increased radius or the decreased radius, in the edge image. When the edge of the regular shape is detected, it is verified that the type of the candidate of the regular shape is the regular shape, and the increased radius or the decreased radius is set as an actual radius of the regular shape; and when no edge of the regular shape is detected, it is verified that the type of the candidate of the regular shape is not the regular shape.

In an example, the apparatus for optimizing the size of the candidate of the regular shape and the rotation angle information may include determining a size of the radius of the detected edge of the regular shape, when it is verified that the type of the candidate of the regular shape is the regular shape; and obtaining the optimized size of the regular shape and rotation angle information, based on the determined size of the radius and the detected edge of the regular shape. Here, the increased radius or the decreased radius when the edge of the regular shape is detected may be set as the actual radius of the regular shape. Furthermore, rotation angle information of the regular shape, such as information that a triangle is a normal triangle, an inverted triangle, or a triangle with another rotation angle, may be obtained based on the detected edge of the actual regular shape.

In this way, by using the spatial distribution of the edge-equidistant points extracted in the edge image obtained after performing the edge detection, an analysis of spatial profiles of the edge-equidistant points, such as local orientation profiles of straight lines (or curved lines, single points or the like) consisting of edge-equidistant points around a point where a lot of edge-equidistant points are distributed (such as a concentrating point), can be performed. According to a principle that a regular shape usually includes edge-equidistant points with the similar local orientation profiles (for example, a triangle includes edge-equidistant points with local orientation profile of an included angle of 120 degrees (or 60 degrees)), clustering for the edge-equidistant points with the similar local orientation profiles are performed based on spatial positions, so that the edge-equidistant points with the similar local orientation profiles are classified into the same group. And then, an aggregation analysis of the local orientation profiles and the spatial positions of the edge-equidistant points in the same group (for example a triangle has local orientation profiles of an included angle of 120 degrees (or 60 degrees), and included angles between connection lines between the concentrating points of the edge-equidistant points and orientations of the connection lines overlap the local orientation profiles) is performed, and an aggregation analysis of a type of a candidate of the regular shape is performed. Furthermore, the set radius may be increased or decreased by the vertical distance between the center point and the connection line between the edge-equidistant points in the same group (namely, the radius of the similar regular figure consisting to the edge-equidistant points), so that the increased radius or the decreased radius is obtained; it may be detected whether the edge of the regular shape exists in the vicinity of positions, whose distance from the center point is the increased radius or the decreased radius, in the edge image; and it may be verified whether the regular shape exists, and the radius size and rotation angle information of the regular shape of the actual regular shape may be optimized.

It should be noted that, the above specific embodiments are just examples and the present invention is not limited to these embodiments. A person skilled in the art may merge and combine the steps and apparatuses separately described in the embodiments according to the concept of the present invention to achieve the effect of the present invention. The above embodiments obtained by the merging and combination are included in the present invention and their descriptions are omitted here.

It should be noted that, the advantages, benefits and effects described in the present specification are just examples, the present invention is not limited to these examples, and it cannot be considered that these advantages, benefits and effects are required by the embodiments of the present invention. Furthermore, the specific content of the present specification is only for description and understanding rather than limitation, and the present invention is not limited to specific content.

The present invention may be implemented as a system, an apparatus, a method or a computer program product. Therefore, the present invention may be specifically implemented as hardware, software (including firmware, resident software, micro-code, etc.) a combination of hardware and software, which is referred to as "circuit", "module", "apparatus" or "system". Additionally, the present invention may also be implemented as a computer program product in one or more computer-readable media, and the computer-readable media include computer-readable computer codes.

Any combinations of one or more computer-readable media may be used. The computer-readable medium may be a computer-readable signal medium or a computer-readable storage medium. The computer-readable storage medium may be, for example, a system, apparatus or an electric, magnetic, optical, electromagnetic, infrared or semiconductor element, or a combination of any of the above, but is not limited to them. Specifically, the computer-readable storage medium may include a single electrical connection having a plurality of wires, a portable computer disk, a hard disk, a random access memory (RAM), a read-only memory, an erasable programmable read-only memory (an EPROM or a Flash memory), an optical fiber, a portable compact disc read-only memory (CD-ROM), an optical memory device, a magnetic storage device, or a suitable combination of any of the above. In the present specification, the computer-readable storage medium may include a tangible medium including or storing a program, and the program may be used by an instruction execution system, apparatus, device or a combination thereof.

The computer-readable signal medium may include data signals to be propagated as a part of a carrier wave, where computer-readable program codes are loaded. The propagated data signals may be electromagnetic signals, optical signals or a suitable combination thereof, but are not limited to these signals. The computer-readable medium may also be any computer-readable medium except the computer-readable storage medium, the computer-readable medium may send, propagate or transmit a program used by an instruction execution system, apparatus, device or a combination thereof.

The program codes included in the computer-readable medium may be transmitted by any transmission media, such as wireless, wire, optical cable, RF or any combinations thereof.

The computer program codes for executing the operation of the present invention may be written in one or more programming languages or a combination thereof. The programming languages include an object-oriented language such as JAVA, Smalltalk, C++, and a procedural programming language such as C or similar programming languages. The program codes may be executed on a user's computer completely or partly, be executed as an independent software package, be executed on a user's computer partly and a remote computer partly, or be executed on a remote computer or server completely. The remote computer may be connected to the user's computer via any network such as a local area network (LAN) or a wide area network (WAN), or may be connected to an external computer (for example by the Internet provided by an Internet service provider).

The present invention is described with reference to the flowcharts and/or block diagrams of the method, apparatus (system) and computer program products according to the embodiments of the present invention. It should be noted that, each block and a combination of the blocks in the flowcharts and/or the block diagrams may be implemented by computer program instructions. The computer program instructions may be provided to a processor of a general-purpose computer, a special-purpose computer or another programmable data processing apparatus, and the computer program instructions are executed by the computer or other programmable data processing apparatus to implement functions/operations in the flowcharts and/or the block diagrams.

The computer program instructions may also be stored in the computer-readable medium for making the computer or other programmable data processing apparatuses operate in a specific manner, and the instructions stored in the computer-readable medium may generate an instruction means for implementing the functions/operations in the flowcharts and/or the block diagrams.

The computer program codes may also be loaded on the computer, other programmable data processing apparatuses or other devices, so as to execute a series of operation steps in the computer, other programmable data processing apparatuses or other devices, so that the instructions executed in the computer or other programmable apparatuses can provide a process for implementing the functions/operations in the flowcharts and/or block diagrams.

FIG. 12 is a block diagram illustrating an example of a computer system or server 12 for implementing the embodiments of the present invention. The computer system or server 12 is just an example, and the function and use range of the embodiments of the present invention is not limited to this example.

As shown in FIG. 12, the computer system or server 12 is expressed in the form of a general-purpose computer device. The components of the computer system or server 12 may include and be not limited to one or more processors or processing units 16, a system memory 28, and a bus for connecting other system components (including the system memory 28 and the processing unit 16).

The bus 18 means one or more structures of some bus structures, such as a memory bus or a memory controller, a peripheral bus, an accelerated graphics port, a processor or a local bus using any bus structure of some bus structures. As an example, the system structures include and are not limited to an industry standard architecture (ISA) bus, a micro channel architecture (MAC) bus, an enhanced ISA bus, a video electronic standard association (VESA) local bus, and a peripheral component interconnect (PCI) bus.

The computer system or server 12 typically includes a plurality of computer system readable media. These media may be any usable media that can be accessed by the computer system or server 12, such as volatile and non-volatile media, and movable and non-movable media.

The system memory 28 may include a computer system readable medium of the form of a volatile memory, such as a random access memory (RAM) 30 and/or a cache memory 32. The computer system or server 12 may further include other movable/non-movable, or volatile/non-volatile computer system storage media. As an example, a storage system 34 may be used to read or write a non-movable and non-volatile magnetic medium (not shown in FIG. 12, normally referred to as a "hard disk drive"). Although not shown in FIG. 12, a magnetic disk drive for reading or writing a movable and non-volatile disk (such as a "floppy disk"), and an optical disk drive for reading or writing a movable and non-volatile optical disk (such as a CD-ROM, a DVD-ROM or other optical media) may be provided. In this case, each drive may connected to the bus 18 via one or more data media interfaces. The memory 28 may include at least one program product having a set of (e.g., at least one) program module, which is configured to execute the functions of the embodiments of the present invention.

A program/application tool 40 having a set of (at least one) program module 42 may be stored in the memory 28, the program module 42 includes and is not limited to an operation system, one or more application programs, other program modules and program data, and each one or combination of these examples may include implementation of a network environment. The program model 42 usually executes the functions and/or methods in the embodiments of the present invention.

The computer system or server 12 may also communicate with one or more external equipment 14 (such as a keyboard, a pointing device, and a display), may also communicate with one or more devices for making a user interact with the computer system or server 12, and/or may also communicate with any device (such as a network card, or a modem) for making the computer system or server 12 communicate with one or more other computer devices. The communication may be performed via an input/output (1/0) interface. Furthermore, the computer system or server 12 may also communicate with one or more networks (such as a local area network (LAN), a wide area network (WAN) and/or a public network, i.e., the internet) via a network adapter 20. As shown in FIG. 12, the network adapter 20 communicates with other modules of the computer system or server 12 via the bus 18. It should be noted that, although not shown in FIG. 12, the computer system or server 12 may use other hardware and/or software modules, which include and are not limited to micro codes, a device drive, a redundant processing unit, an external magnetic disk drive array, a RAID system, a tape drive and a data backup storage system.

The block diagrams of the units, apparatuses, devices and system are just examples, the connection, placement and configuration illustrated in the block diagrams related to the present invention are not limited to these examples, and the units, apparatuses, devices and system may be connected, placed or configured in any way. The terms "comprise", "include" and "have" are open-form terms, which mean and may be changed into "include and is not limited to". The terms "or" and "and" mean and may be changed into "and/or", unless the context is clearly not. The term "such as" means and may be changed to "such as, but not limited to".

The flowchart and the method according to the present invention are just examples, and not limited to the steps in the embodiments. The steps of the embodiments may be performed in any order. The terms "next", "subsequently" and "then" are just for describing the present invention, and the present invention is not limited to these terms. Furthermore, the articles "a", "an" and "the" should not be limited to the singular element.

The steps or apparatuses of the present invention are described above. The above descriptions of the embodiments are just examples, and various modifications, replacements or combinations may be made without departing from the scope of the present invention by persons skilled in the art.

The steps of the above method may be performed by any appropriate means that can perform the corresponding functions. The means may include any components and/or modules of hardware and/or software, and include but not be limited to a circuit, a dedicated application-specific integrated circuit (ASIC) or a processor.

The present invention may use a general-purpose processor, a digital signal processor (DSP), an ASIC, a field programmable gate array (FPGA) or other programmable logic device (PLD), a discrete gate or transistor logic, discrete hardware components or any other combination for executing the functions to realize the logic blocks, modules and circuits of the embodiments. The general-purpose processor is a micro-processor, and alternatively, the processor may be any processors, controllers, micro-controllers or state machines that can be obtained commercially. The processor may also be the combination of the computer equipment, such as the combination of a DSP and a micro-processor, the combination of plural micro-processors, or the combination of a DSP and plural micro-processors.

The steps of the method according to the present invention may be incorporated in the hardware, software modules executed by a processor or the combination of these two directly. The software modules may be stored in a recording medium with any shape. The examples of the recording medium includes a random access memory (RAM), a read-only memory (ROM), a flash memory, an EPROM memory, an EEPROM memory, a register, a hard disk drive, a removable disk, a CD-ROM, etc. The recording medium may be linked to a processor so that the processor reads information from the recording medium or writes information into the recording medium. Alternatively, the recording medium and the processor may also be a whole apparatus. The software module may be a single command or many commands, and may be distributed in several code segments, different programs or plural recording media.

Steps of the above method may be performed in time order, however the performing sequence is not limited to the time order. Any steps may be performed in parallel or independently.

The functions may be realized by hardware, software, firmware or any combination thereof. When the function is implemented by software, the function may be stored in a computer-readable medium as one or more commands. The recording medium may be any real medium that can be accessed by a computer. Such a computer-readable medium includes a RAM, a ROM, an EEPROM, a CD-ROM or other laser discs, a magnetic disk or other magnetic memory, or any other real media that carry or store commands, data or program codes and are accessed by the computer. Such disk and disc include a CD, a laser disc, an optical disc, a DVD disc, a floppy disk and a blue-ray disc, and the disk usually reproduces data and the disc reproduces data by a laser.

Thus, the operations may be performed by a computer program product. For example, such computer program product may be a tangible medium where computer-readable commands are stored (or coded), and the commands may be executed by one or more processors to perform the operation. The computer program product may include packaging material.

The software or commands may also be transmitted by a transmission medium. For example, a coaxial cable, an optical cable, a twisted cable, a digital subscriber line (DSL), or a transmission medium of the wireless technology of infrared, wireless or microwave may be used to transmit the software from a website, a server or another remote source.

Additionally, the modules and/or other appropriate means of the method or technology may be obtained from a user terminal and/or base station, or by other methods. For example, such equipment may be connected to a server so as to perform the transmission of the means of the above method. Alternatively, the methods may be provided via a storage unit (for example, a physical storage medium such as a RAM, a ROM, a CD or a floppy disc), so that the user terminal and/or the base station can obtain the methods when it is connected to the equipment. Furthermore, any other appropriate technology may be provided to the equipment by the method.

The present specification and the appended claims includes other examples and implementations. For example, the above functions may be implemented by a processor, hardware, software, firmware, hard-wire or any combination thereof. The features for implementing the functions may be located at any physical position where which is distributed to each position physically. Furthermore, the term "or" before the term "at least one" means a separate enumerating, and for example, "at least one of A, B or C" means (1) A, B or C, (2) AB, AC or BC, or (3) ABC (namely, A and B and C). Additionally, the term "example" does not mean a preferable example or an example superior to other examples.

Various modifications, replacements or combinations may be made without departing from the scope of the present invention by persons skilled in the art. Furthermore, the scope of the present specification and the claims are not limited to the above processing, machine, manufacture, composition of events, means, method and operation. The processing, machine, manufacture, composition of events, means, method and operation with a similar function or a similar result may also be applied to the present invention. Therefore, the scope of the appended claims include such processing, machine, manufacture, composition of events, means, method and operation.

The purposes of the present invention is described above. The above descriptions of the embodiments are just examples, and various modifications, replacements or combinations may be made without departing from the scope of the present invention by persons skilled in the art.

The basic principle of the present invention is described above with reference to the embodiments, however the present invention is not limited to the principle.

The present application is based on and claims the benefit of priority of Chinese Priority Application No.201510387766.4 filed on July 3, 2015, the entire contents of which are hereby incorporated by reference.

## Claims

1. A method for detecting a regular shape, the method comprising:
performing edge detecting for input image data to form an edge image including a plurality of edges;
extracting, based on a set radius, edge-equidistant points whose distance between the edge-equidistant point and corresponding edges of the plurality of edges is equal to the set radius;
analyzing, based on spatial distribution of the edge-equidistant points in a local window, local orientation profiles of the edge-equidistant points in the local window at concentrating points;
performing, based on spatial positions, clustering for the edge-equidistant points with the similar local orientation profiles to classify the edge-equidistant points with the similar local orientation profiles into the same group; and
performing, based on the local orientation profiles and the spatial positions of the edge-equidistant points in the same group, an aggregation analysis of a type of a candidate of the regular shape.

2. The method for detecting a regular shape according to claim 1,
wherein performing, based on the local orientation profiles and the spatial positions of the edge-equidistant points in the same group, the aggregation analysis of the type of the candidate of the regular shape includes
determining a number of sides and a rotation angle of a shape of the candidate of the regular shape, based on local orientation directions indicated by the local orientation profiles of the edge-equidistant points at one pixel, and a number of the local orientation directions, when a number of the edge-equidistant points at the one pixel is greater than a first threshold; and
determining the type of the candidate of the regular shape, based on the local orientation profiles of the edge-equidistant points at a plurality of pixels, and spatial positional relationship among the edge-equidistant points at the pixels, when a number of the edge-equidistant points at the pixels is less than the first threshold and greater than a second threshold, the first threshold being greater than the second threshold.

3. The method for detecting a regular shape according to claim 2,
wherein determining the type of the candidate of the regular shape, based on the local orientation profiles of the edge-equidistant points at the pixels, and the spatial positional relationship among the edge-equidistant points at the pixels, when the number of the edge-equidistant points at the pixels is less than the first threshold and greater than the second threshold includes
determining that the type of the candidate of the regular shape is a polygon, and determining a number of sides of the polygon based on an included angle between two local orientation directions indicated by the local orientation profiles of the edge-equidistant points at each of the pixels, and an overlap degree between connection lines between the edge-equidistant points at each of the pixels and the corresponding included angle, when the local orientation profiles of the edge-equidistant points at each of the pixels clearly indicate the two local orientation directions;
determining that the type of the candidate of the regular shape is a circle, when the local orientation profiles of the edge-equidistant points at each of the pixels do not clearly indicate a local orientation direction; and
determining that no candidate of the regular shape exists, when the local orientation profiles of the edge-equidistant points at each of the pixels clearly indicate only one local orientation direction.

4. The method for detecting a regular shape according to claim 3,
wherein determining that the type of the candidate of the regular shape is the polygon, and determining the number of the sides of the polygon based on the included angle between the two local orientation directions indicated by the local orientation profiles of the edge-equidistant points at each of the pixels, and the overlap degree between the connection lines between the edge-equidistant points at each of the pixels and the corresponding included angle, when the local orientation profiles of the edge-equidistant points at each of the pixels clearly indicate the two local orientation directions includes
determining that the number of the sides of the polygon is n, n being a positive integer greater than or equal to 3, when the included angle between the two local orientation directions is basically equal to 360°/n, n pixels whose the number of the edge-equidistant points is less than the first threshold and greater than the second threshold, and the connection lines between the n pixels basically overlap the corresponding local orientation directions.

5. The method for detecting a regular shape according to any one preceding claim, the method further comprising:
verifying the type of the candidate of the regular shape;
optimizing a size of the candidate of the regular shape and rotation angle information; and
outputting the regular shape after verification and optimization.

6. The method for detecting a regular shape according to claim 5,
wherein verifying the type of the candidate of the regular shape includes estimating, based on the type of the candidate of the regular shape, a center point of the candidate of the regular shape;
increasing or decreasing the set radius by a vertical distance between the center point and a connection line between the edge-equidistant points in the same group, so that an increased radius or a decreased radius is obtained;
detecting whether an edge of a regular shape exists in the vicinity of positions, whose distance from the center point is the increased radius or the decreased radius, in the edge image;
verifying that the type of the candidate of the regular shape is the regular shape, and setting the increased radius or the decreased radius as an actual radius of the regular shape, when the edge of the regular shape is detected; and
verifying that the type of the candidate of the regular shape is not the regular shape, when no edge of the regular shape is detected.

7. The method for detecting a regular shape according to claim 6,
wherein optimizing the size of the candidate of the regular shape and the rotation angle information includes
determining a size of the radius of the detected edge of the regular shape, when it is verified that the type of the candidate of the regular shape is the regular shape; and
obtaining the optimized size of the regular shape and rotation angle information, based on the determined size of the radius and the detected edge of the regular shape.

8. The method for detecting a regular shape according to any one preceding claim,
wherein extracting the edge-equidistant points based on the set radius includes
extracting, using a radial symmetry transform algorithm, the edge-equidistant points whose distance from a nearest edge pixel is the set radius; and
retaining the edge-equidistant points whose number of the edge-equidistant points at a same pixel is greater than a predetermined filtering threshold.

9. The method for detecting a regular shape according to any one preceding claim,
wherein analyzing the local orientation profiles of the edge-equidistant points in the local window at the concentrating points based on the spatial distribution of the edge-equidistant points in the local window includes
analyzing, using an independent component analysis algorithm, the local orientation profiles of the edge-equidistant points in the local window.

10. A system for detecting a regular shape, the system comprising:
an edge detecting apparatus (1101) configured to perform edge detecting for input image data to form an edge image including a plurality of edges;
an edge-equidistant point extracting apparatus (1102) configured to extract edge-equidistant points based on a set radius, distances between each of the edge-equidistant points and corresponding edges of the plurality of edges being equal to the set radius;
a local orientation profile analyzing apparatus (1103) configured to analyze, based on spatial distribution of the edge-equidistant points in a local window, local orientation profiles of the edge-equidistant points in the local window at concentrating points;
a clustering apparatus (1104) configured to perform, based on spatial positions, clustering for the edge-equidistant points with the similar local orientation profiles to classify the edge-equidistant points with the similar local orientation profiles into the same group; and
an aggregation analysis apparatus (1105) configured to perform, based on the local orientation profiles and the spatial positions of the edge-equidistant points in the same group, an aggregation analysis of a type of a candidate of the regular shape.
